# EUROPEAN PATENT APPLICATION

(11) **EP 4 467 308 A1**
(43) Date of publication of application: **27.11.2024**
(21) Application number: 22922289.8
(22) Date of filing: 01.04.2022
(51) Int. Cl.: B29B 7/48, C08J 11/10, B29B 7/74, B29B 7/84, B29C 48/385, B29C 48/40, B29C 48/69

(54) **DECROSSLINKING APPARATUS AND DECROSSLINKING METHOD USING SAME**

(30) Priority: 21.01.2022 KR 20220009142
(71) Applicant: LS Cable & System Ltd., Anyang-si, Gyeonggi-do 14119 (KR)
(72) Inventor: KIM, Du Ki, Anyang-si Gyeonggi-do 14092 (KR); NAM, Gi Joon, Seoul 06510 (KR); SHIN, Jung In, Hwaseong-si Gyeonggi-do 18357 (KR); HEO, Sung Ik, Gunpo-si Gyeonggi-do 15874 (KR)
(74) Representative: K&L Gates LLP
(86) International application number: PCT/KR2022/004692
(87) International publication number: WO 2023/140430

(57) **Abstract**

The present invention relates to a decrosslinking apparatus for recycling polymer resin waste and a decrosslinking method using the same. Specifically, the present invention relates to a decrosslinking apparatus and a decrosslinking method using the same, wherein the decrosslinking apparatus can decrosslink waste including various types polymer resins to be recycled having different degrees of crosslinking into recycled polymer resins having a uniformly low degree of crosslinking, and effectively remove odors generated by the decomposition of additives that occurs due to high temperature during the decrosslinking.

## Description

### [Technical Field]

The present invention relates to a decrosslinking apparatus for recycling polymer resin waste and a decrosslinking method using the same. Specifically, the present invention relates to a decrosslinking apparatus and a decrosslinking method using the same, which can decrosslink waste including various types polymer resins to be recycled having different degrees of crosslinking into recycled polymer resins having a uniformly low degree of crosslinking, and effectively remove odors generated by the decomposition of additives that occurs due to high temperature during the decrosslinking.

### [Background Art]

Recently, the development of technology for recycling mixed waste plastics has emerged as an important social issue in order to protect resources and prevent environmental pollution. Recycling efficiency is gradually improving with the law enforcement of "extended producer responsibility (EPR)" for waste packaging films and the like used in general households.

However, polyolefin-based resins, such as polyethylene-based resins, are the most used among general-purpose plastics due to their excellent properties compared to their low cost, but when they are crosslinked, the insoluble and infusible nature of the crosslinked polymer chains has not yet led to the development of appropriate treatment or recycling methods.

Therefore, currently, the crosslinked polyolefin-based resins are mostly incinerated or landfilled, and there is no effective recycling, which causes many environmental problems.

To recycle these waste crosslinked polyolefin-based resins, there is a need for a complex system to decrosslink the polyolefin-based resin by partially or completely removing the crosslinking structure of the polyolefin-based resin through a decrosslinking reaction, and to organically or inorganically modify the decrosslinked reaction product.

Meanwhile, the waste crosslinked polyolefin-based resin may have different degrees of crosslinking and states depending on the working conditions and environment in which the waste crosslinked polyolefin-based resin was used. For example, there is a waste resin that is fully crosslinked after normal extrusion and has a degree of crosslinking of 80 % or more, a resin that is discarded before use due to reasons such as cancellation of delivery as a base resin raw material that includes an unreacted crosslinker, a waste resin of pre-pressed that is used during pre-extrusion to raise the temperature, pressure, and the like to a level that is targeted as an extrusion condition of an extruder for a compound, and has a degree of crosslinking distributed from 0 to 60 %.

When a mixture of polymer resins to be recycled possessing various degrees of crosslinking and states is decrosslinked under the same condition, it is difficult to recycle due to the wide distribution of the degree of crosslinking of the recycled resin that is manufactured, and there is a problem that odor is generated due to the decomposition of additives at high temperature for decrosslinking of fully crosslinked waste resin that possesses a relatively high degree of crosslinking.

Therefore, there is an acute need for a decrosslinking apparatus and a decrosslinking method using the same, which can decrosslink waste including various types polymer resins to be recycled having different degrees of crosslinking into recycled polymer resins having a uniformly low degree of crosslinking, and effectively remove odors generated by the decomposition of additives that occurs due to high temperature during the decrosslinking.

### [Disclosure]

### [Technical Problem]

The present invention is directed to providing a decrosslinking apparatus and a decrosslinking method using the same, which can decrosslink waste including various types polymer resins to be recycled having different degrees of crosslinking into recycled polymer resins having a uniformly low degree of crosslinking.

In addition, the present invention is directed to providing a decrosslinking apparatus and a decrosslinking method using the same, which can effectively remove odors generated by the decomposition of additives that occurs due to high temperature during the decrosslinking.

### [Technical Solution]

To achieve the objects, the present invention is directed to providing
a decrosslinking apparatus for manufacturing a recycled resin through decrosslinking of a waste resin, the decrosslinking apparatus may include: a mixing part configured to feed a mixed scrap that includes a mixture of two or more types of waste resins having different degrees of crosslinking; a primary extruder configured to extrude the mixed scrap; and a secondary extruder connected in series to the primary extruder to re-extrude an extrudate discharged from the primary extruder, in which pressure inside the primary extruder to which the secondary extruder is connected may increase compared to pressure inside the primary extruder to which the secondary extruder is not connected.

Here, the primary extruder may be a twin screw extruder with a twin screw applied, and a structure of the screw may include three areas of a feeding portion, a mixing portion, and a discharging portion in sequence.

In addition, pressure inside the discharging portion of the primary extruder to which the secondary extruder is connected may increase by 8 to 20 % with respect to pressure inside the discharging portion of the primary extruder to which the secondary extruder is not connected.

Further, in the primary extruder, a space occupied by the feeding portion area may be allocated from 20 to 30 %, a space occupied by the mixing portion area may be allocated from 40 to 60 %, and a space occupied by the discharging portion area may be allocated from 10 to 20 %, with respect to a total area of the primary extruder.

Further, an extrusion temperature in the feeding portion area may be controlled at 200 to 250 °C, an extrusion temperature in the mixing portion area may be controlled at 200 to 350 °C, and an extrusion temperature in the discharging portion area may be controlled at 150 to 300 °C.

Meanwhile, the secondary extruder may include a filter-screw extruder in which a block portion impeding a flow of an extrudate in the middle of a passage through which the extrudate discharged from the discharging portion of the primary extruder moves to increases pressure inside the primary extruder, and a passage portion 320 formed in the form of a helical screw around the periphery of the block portion 310 to provide a passage through which the extrudate moves, are formed.

Here, one or more exhaust holes may be formed in the passage portion to exhaust gases from the extrudate, and the decrosslinking apparatus may further include a venting part configured to filter and deodorize the gases exhausted through the exhaust hole.

Further, the mixed scrap may include a non-crosslinked resin including a waste crosslinked resin having a degree of crosslinking of 80 % or more and an unreacted crosslinker.

Here, the recycled resin manufactured using the decrosslinking apparatus may have a content of 5 wt% or less of resin having a degree of crosslinking exceeding 7%.

Meanwhile, there is provided a decrosslinking method, sequentially performing steps a) to c) below using the decrosslinking apparatus.

a) physically mixing a mixed scrap that includes two or more types of waste resins having different degrees of crosslinking, b) feeding the mixed scrap to the primary extruder for extrusion, and c) feeding an extrudate extruded in step b) to the secondary extruder connected in series to the primary extruder for extrusion.

### [Advantageous Effects]

A decrosslinking apparatus according to the present invention and a decrosslinking method using the same exhibit an excellent effect of manufacturing a recycled polymer resin having a uniformly low degree of crosslinking by controlling internal pressure for each section of a primary extruder through two extruders connected in series.

In addition, a decrosslinking apparatus according to the present invention and a decrosslinking method using the same exhibit an excellent effect of effectively removing odors caused by the decomposition of additives due to a high temperature during decrosslinking through gas discharge and filtration from a secondary extruder of two extruders connected in series.

### [Description of Drawings]

FIG. 1 schematically illustrates a configuration of a decrosslinking apparatus according to the present invention.
FIG. 2 schematically illustrates transverse and longitudinal cross-sectional structures of a secondary extruder in FIG. 1.
FIG. 3 is a graph illustrating a change in load on a screw motor inside a primary extruder depending on whether the secondary extruder is applied.
FIG. 4 is a graph illustrating a change in extrusion volume per unit rotation of a screw inside the primary extruder depending on whether the secondary extruder is applied.
FIG. 5 is a graph illustrating a change in pressure for each section of the screw inside the primary extruder depending on whether the secondary extruder is applied.

### [Mode for Disclosure]

Hereinafter, exemplary embodiments of the present invention will be described in detail. However, the present invention is not limited to the exemplary embodiments to be described below and may be specified as other aspects. On the contrary, the embodiments introduced herein are provided to make the disclosed content thorough and complete, and sufficiently transfer the spirit of the present invention to those skilled in the art. Like reference numerals indicate like constituent elements throughout the specification.

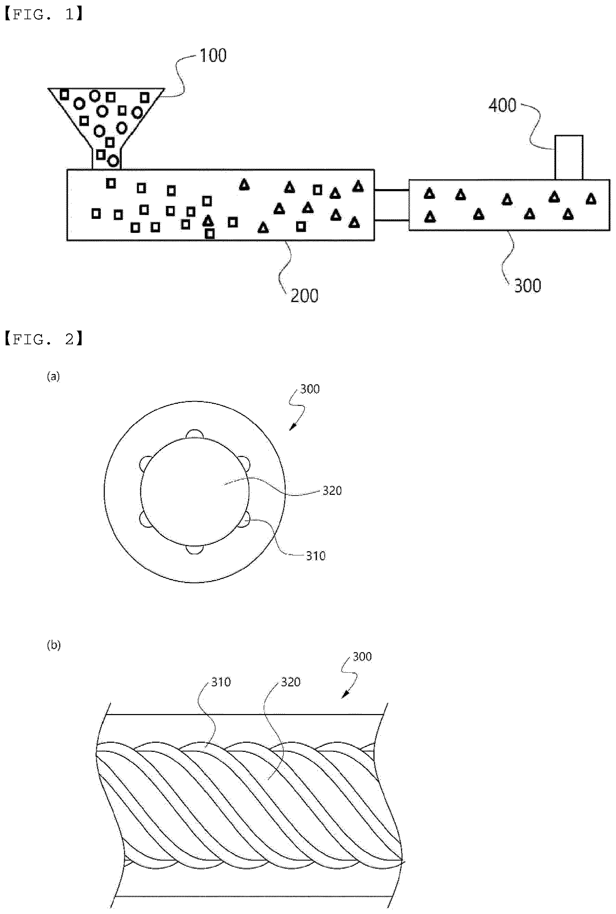

FIG. 1 schematically illustrates a configuration of a decrosslinking apparatus according to the present invention.

As described above in FIG. 1, a decrosslinking apparatus according to the present invention may include a mixing part 100 configured to supply mixed scrap, which is a waste resin mixture to be recycled, a primary extruder 200 configured to extrude the mixed scrap, a secondary extruder 300 configured to re-extrude an extrudate discharged from that primary extruder 200, and a venting part 400 configured to vent gases discharged upon extrusion from the primary extruder 200 and the secondary extruder 300 from the extruder and filter the gases.

Here, the mixing part 100 may perform stirring to physically and uniformly mix two or more types of waste resins having different degrees of crosslinking and states included in the mixed scrap, while providing the mixed scrap to the primary extruder 200.

In addition, the two or more types of waste resins having different degrees of crosslinking and states included in the mixed scrap, may include, for example, a waste resin that is fully crosslinked after normal extrusion and has a degree of crosslinking of 80 % or more, a resin that is discarded with no use due to reasons such as cancellation of delivery as a base resin raw material that includes an unreacted crosslinker, a waste resin of pre-pressed that is used during pre-extrusion to raise the temperature, pressure, and the like to a level that is targeted as an extrusion condition of an extruder for a compound, and has a degree of crosslinking distributed from 0 to 60 %.

Specifically, when the two or more types of waste resins included in the mixed scrap are polyolefin-based resins, the waste resin that is fully crosslinked and has a degree of crosslinking of 80 % or more may have a melt index (MI) of 0.5 or less, a tensile strength of 1 to 3 kgf/mm², and an elongation of 150 to 600 %, the non-crosslinked waste resin including an unreacted crosslinker may have a melt index (MI) of 1.0 to 5.0, a tensile strength of 1.0 to 3.0 kgf/mm², and an elongation of 150 to 600 %, and the waste resin of pre-pressed may have a melt index (MI) of 0.1 to 5.0, a tensile strength of 1 to 3 kgf/mm², and an elongation of 150 to 600 %.

The primary extruder 200 may be a twin screw extruder with a twin screw applied, and a structure of the screw may be sequentially divided into a total of three areas of a feeding portion, a mixing portion, and a discharging portion. Here, the feeding portion is an area in which the extrusion temperature is adjusted to 200 to 250 °C so that the crosslinking reaction or degradation reaction of the unreacted crosslinker included in the non-crosslinked waste resin in the mixed scrap has been completed.

In addition, the mixing portion is an area in which the extrusion temperature is adjusted to 200 to 350 °C, so that the decrosslinking reaction to remove a crosslinked portion of the crosslinked resin is substantially carried out, and the discharging portion is an area in which the extrusion temperature is adjusted to 150 to 300 °C, so that an extrudate is delivered to the secondary extruder.

In particular, in the primary extruder, with respect to a total area thereof, an area occupied by the feeding portion may be allocated from 20 to 30%, an area occupied by the mixing portion may be allocated from 40 to 60%, and an area occupied by the discharging portion may be allocated from 10 to 20%.

FIG. 2 schematically illustrates transverse and longitudinal cross-sectional structures of the secondary extruder in FIG. 1.

As illustrated in FIG. 2, the secondary extruder, which is connected in series to the primary extruder, may be a filter-screw extruder comprising a block portion 310, which artificially increases pressure inside the primary extruder, particularly in the discharging portion, by impeding a flow of an extrudate in the middle of a passage through which the extrudate discharged from the discharging portion of the primary extruder moves, and a passage portion 320, which is formed in the form of a helical screw around the periphery of the block portion 310 to provide a passage through which the extrudate moves.

Therefore, a more homogeneous mixing and reaction of the extrudate may be carried out inside due to the increase in pressure inside the primary extruder, in particular inside the discharging portion, and a further decrosslinking reaction, which was lacking in the primary extruder, may be carried out inside the secondary extruder. Accordingly, in a resultant recycled resin being manufactured, a content of resin having a degree of crosslinking exceeding 7 % may be controlled to 5 wt% or less, with respect to a total weight of the recycled resin.

Specifically, the pressure inside the discharging portion of the primary extruder to which the secondary extruder is connected may increase by 8 to 20 %, with respect to the pressure inside the discharging portion of the primary extruder to which the secondary extruder is not connected. Here, when an increase rate of the pressure inside the discharging portion of the primary extruder to which the secondary extruder is connected is less than 8 %, the pressure inside the primary extruder is insufficient and a wide distribution of the degree of crosslinking of the recycled resin finally manufactured may be formed, in contrast, when the increase rate is greater than 20 %, the pressure inside the primary extruder is unnecessarily excessive, which may cause damage to the extruder or deterioration of the properties of the recycled resin.

One or more exhaust holes (not illustrated) may be formed in the passage portion 320 through which the extrudate moves in the secondary extruder 300 to exhaust an exhaust gas generated by the decomposition of additives in the extrudate at a high temperature, and the gas discharged through the exhaust hole may be transported to the venting part 400, and the venting part 400 may perform a function of filtering and deodorizing the exhaust gas to remove odors in the process.

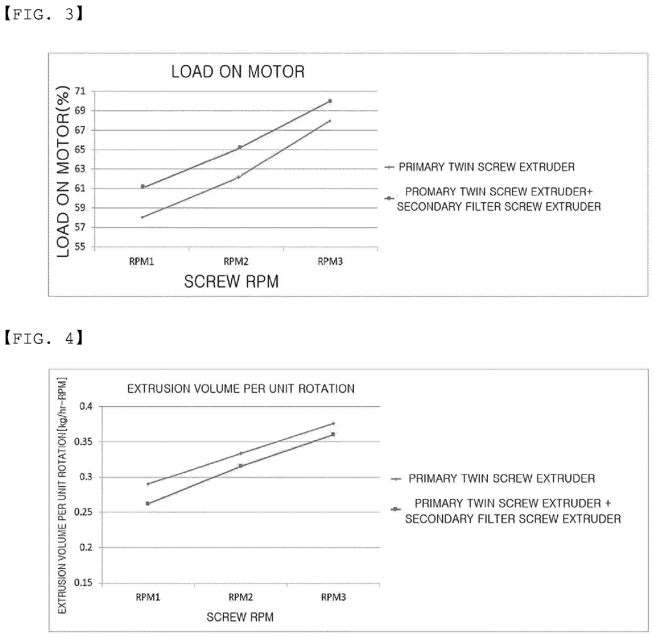

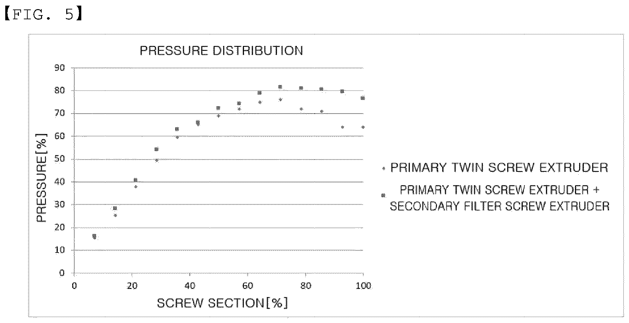

FIG. 3 is a graph illustrating a change in load on a screw motor inside the primary extruder depending on whether the secondary extruder is applied, FIG. 4 is a graph illustrating a change in extrusion volume per unit rotation of an screw inside the primary extruder depending on whether the secondary extruder is applied, and FIG. 5 is a graph illustrating a change in pressure for each section of the screw inside the primary extruder depending on whether the secondary extruder is applied.

In practice, it was confirmed that when the secondary extruder connected in series to the primary extruder was applied, the extrusion volume was reduced due to the increase in load on the motor and pressure inside the primary extruder, compared to a case in which the secondary extruder was not applied. In FIGS. 3 and 4, RPM 1 is 150, RPM 2 is 200, and RPM 3 is 250.

The present invention relates to a decrosslinking method using the decrosslinking apparatus described above, which may include steps a) to c) below in sequence.
a) Physically mixing a mixed scrap, which includes two or more types of waste resins with different degrees of crosslinking or states,
b) feeding the mixed scrap to a primary extruder for extrusion, and
c) feeding an extrudate extruded in step b) to a secondary extruder connected in series to the primary extruder for extrusion.

Step c) may further include a process of collecting and filtering gases discharged from the extrudate through a venting part provided in the secondary extruder.

### [Examples]

### 1. Process conditions

An example of manufacturing a recycled resin from each of mixed scraps including a waste polyethylene resin (XLPE) alone with a degree of crosslinking of 80% or more and a non-crosslinked polyethylene resin containing a waste polyethylene resin with a degree of crosslinking of 80% or more and an unreacted crosslinker in a weight ratio of 5:5, through the decrosslinking apparatus according to the present invention, that is, a decrosslinking apparatus in which a primary extruder and a secondary extruder are connected in series and the secondary extruder is provided with a venting part for purification of the exhaust gas, and a comparative example of manufacturing a recycled resin through a decrosslinking apparatus provided with only a primary extruder to which a secondary extruder is not connected, were carried out.

### 2. Evaluation of recycled resin

The recycled resins manufactured through the decrosslinking process with the process conditions of each of the example and comparative example applied were extruded into specimens, and the appearance state was tactilely and visually evaluated, the tensile strength and elongation of each of the 10 extruded specimens were measured and evaluated, and sensory evaluation of whether there was an odor from the decrosslinking process was performed. The evaluation results are shown in Table 1 below.

**[Table 1]**

| Division | | Appe aran ce | Odor | Tensile strength (kgf/mm²) | Elongati on (%) |
|---|---|---|---|---|---|
| Compa rativ e Examp le | XLPE | Good | Stro ng | 1.2 | 250 |
| | Mixed scrap | Poor | Stro ng | 0.7-1.1 | 50~200 |
| Examp le | XLPE | Good | Weak | 1.3 | 200 |
| | Mixed scrap | Good | Weak | 1.2 | 180~220 |

As summarized in Table 1, when the recycled resin is manufactured by performing the dcrosslinking process with the process conditions of the example, it was confirmed that the appearance of the specimen formed from the recycled resin is good, and the distribution of the tensile strength and elongation is uniform. Therefore, it was confirmed that the degree of crosslinking of the recycled resin is uniform, and the odor was sufficiently removed during the dcrosslinking process. Meanwhile, when the recycled resin is manufactured by performing the decrosslinking process with the process conditions of the comparative example, it was confirmed that the appearance of the specimen formed from the recycled resin manufactured from the mixed scrap was poor, and the distribution of the tensile strength and elongation was wide. Therefore, it was confirmed that the degree of crosslinking of the recycled resin was wide, making it difficult to be recycled, and it was confirmed that the odor was severe during the decrosslinking process.

While the present invention has been described above with reference to the exemplary embodiments, it may be understood by those skilled in the art that the present invention may be variously modified and changed without departing from the spirit and scope of the present invention disclosed in the claims. Therefore, it should be understood that any modified embodiment that essentially includes the constituent elements of the claims of the present invention is included in the technical scope of the present invention.

## Claims

1. A decrosslinking apparatus for manufacturing a recycled resin through decrosslinking of a waste resin, the decrosslinking apparatus comprising:
a mixing part configured to feed a mixed scrap that includes a mixture of two or more types of waste resins having different degrees of crosslinking;
a primary extruder configured to extrude the mixed scrap; and
a secondary extruder connected in series to the primary extruder to re-extrude an extrudate discharged from the primary extruder,
wherein pressure inside the primary extruder to which the secondary extruder is connected increases compared to pressure inside the primary extruder to which the secondary extruder is not connected.

2. The decrosslinking apparatus of claim 1, wherein the primary extruder is a twin screw extruder with a twin screw applied, and wherein a structure of the screw includes three areas of a feeding portion, a mixing portion, and a discharging portion in sequence.

3. The decrosslinking apparatus of claim 2, wherein pressure inside the discharging portion of the primary extruder to which the secondary extruder is connected increases by 8 to 20 % with respect to pressure inside the discharging portion of the primary extruder to which the secondary extruder is not connected.

4. The decrosslinking apparatus of claim 2, wherein in the primary extruder, a space occupied by the feeding portion area is allocated from 20 to 30 %, a space occupied by the mixing portion area is allocated from 40 to 60 %, and a space occupied by the discharging portion area is allocated from 10 to 20 %, with respect to a total area of the primary extruder.

5. The decrosslinking apparatus of claim 2, wherein an extrusion temperature in the feeding portion area is controlled at 200 to 250 °C, an extrusion temperature in the mixing portion area is controlled at 200 to 350 °C, and an extrusion temperature in the discharging portion area is controlled at 150 to 300 °C.

6. The decrosslinking apparatus of any one of claims 1 to 5, wherein the secondary extruder includes a filter-screw extruder in which a block portion impeding a flow of an extrudate in the middle of a passage through which the extrudate discharged from the discharging portion of the primary extruder moves to increases pressure inside the primary extruder, and a passage portion 320 formed in the form of a helical screw around the periphery of the block portion 310 to provide a passage through which the extrudate moves, are formed.

7. The decrosslinking apparatus of claim 6, wherein one or more exhaust holes are formed in the passage portion to exhaust gases from the extrudate, and further comprising:
a venting part configured to filter and deodorize the gases exhausted through the exhaust hole.

8. The decrosslinking apparatus of any one of claims 1 to 5, wherein the mixed scrap includes a non-crosslinked resin including a waste crosslinked resin having a degree of crosslinking of 80 % or more and an unreacted crosslinker.

9. The decrosslinking apparatus of claim 8, wherein the recycled resin manufactured using the decrosslinking apparatus has a content of 5 wt% or less of resin having a degree of crosslinking exceeding 7%.

10. A decrosslinking method, sequentially performing steps a) to c) below using the decrosslinking apparatus of any one of claims 1 to 5, the decrosslinking method comprising:
a) physically mixing a mixed scrap that includes two or more types of waste resins having different degrees of crosslinking;
b) feeding the mixed scrap to the primary extruder for extrusion; and
c) feeding an extrudate extruded in step b) to the secondary extruder connected in series to the primary extruder for extrusion.
